# EUROPÄISCHE PATENTSCHRIFT

(11) **EP 2 613 180 B1**
(45) Veröffentlichungstag und Bekanntmachung des Hinweises auf die Patenterteilung: **26.03.2014**
(21) Anmeldenummer: 12000649.9
(22) Anmeldetag: 01.02.2012
(51) Int. Cl.: G02B 1/04, B29D 11/00

(54) **Silikon-Kontaktlinse**
Silicon contact lens
Lentille de contact en silicone

(43) Veröffentlichungstag der Anmeldung: 10.07.2013
(73) Patentinhaber: LensWista AG, 12489 Berlin (DE)
(72) Erfinder: Görne, Martin, 22337 Hamburg (DE); Kordick, Thomas, 63773 Goldbach (DE)
(74) Vertreter: Diehl & Partner GbR

(56) Entgegenhaltungen:
- EP-A2- 0 908 476
- DE-B1- 2 414 928
- US-A- 4 285 890
- US-A- 5 466 147
- US-B1- 6 444 145

## Beschreibung

Die vorliegende Anmeldung bezieht sich auf eine "*weiche*" Kontaktlinse mit hervorragenden Trageeigenschaften.

Herkömmliche Kontaktlinsen, z.B. die aus der deutschen Gebrauchsmusterschrift G 87 10 765 U1 bekannte, weisen einen radial inneren Teil aus einem härteren, und einen radial äußeren Teil aus einem weicheren Material auf. Die Innenfläche ist vollständig konkav und die Außenfläche vollständig konvex, d. h. beide Flächen weisen eine positive Gauß'sche Krümmung auf. Diese bekannte Linse ist hinsichtlich ihres Tragekomforts nicht befriedigend.

Es ist auch bekannt, eine Kontaktlinse aus Polymethylmethacrylat (PMMA) mit einer hydrophilen Beschichtung zu versehen (US 5,080,924). Dennoch wird der Tragekomfort solcher Linsen noch nicht als zufriedenstellend empfunden. Aus den Dokumenten US 6,444,145 B1 und US 5,466,147 sind Formen zur Herstellung von Kontaktlinsen mit konturierter Kante bekannt, deren männlicher Teil an ihrem Außenrand eine Abrundung bzw. Abfassung aufweist.

Aus dem Dokument US 4,285,890 ist ein Verfahren zur Herstellung von Silikon-Kontaktlinsen bekannt, bei dem die beiden Formteile zueinander in linearem Kontakt stehen.

Aus dem Dokument EP 0 908 476 A2 ist ein Verfahren zum Herstellen eines polymeren Formartikels mit hydrophiler Oberfläche bekannt, wobei die Hydrophilierung durch eine Vorbeschichtung der Form erhalten wird.

Aus dem Dokument DT 24 14 928 B1 ist ein Verfahren zum Ablösen von Silikongummipresskörpern von Presswerkzeugen bekannt, bei dem der Formkörper zum Ablösen von dem Werkzeug durch Aufquellen des Formkörpers in einem den Silikongummi quellenden Lösungsmittel gedehnt, und das Lösungsmittel anschließend wieder aus dem Formkörper entfernt wird.

Die Erfindung setzt sich zum Ziel, eine Kontaktlinse, die einen guten oder gar hervorragenden Tragekomfort aufweist, sowie ein Verfahren zu deren Herstellung bereitzustellen.

Dieses Problem wird gelöst durch eine Kontaktlinse aus Silikon gemäß Anspruch 1. Durch ihre Randkontur gleitet die Linse besonders leicht auf den Tränenflüssigkeitsfilm auf.

Diese Kontaktlinse weist eine Oberflächenschicht aus einem hydrophilen Material auf, was den Tragekomfort weiter verbessert.

Gemäß einem anderen Aspekt wird das Problem gelöst durch ein Verfahren gemäß Anspruch 8. Dadurch wird das Auftreten einer Schnittkante, die als störend empfunden werden könnte, vermieden.

Die so erhaltene Rohlinse wird in einem kombinierten PECVD/CVD-Verfahren hydrophiliert, wodurch besonders dicke Beschichtungen erreicht werden.

Weitere Merkmale der Erfindung ergeben sich aus der nachfolgenden Beschreibung von Ausführungsbeispielen in Verbindung mit den Ansprüchen sowie den Figuren. Die Erfindung ist nicht auf die beschriebenen Ausführungsbeispiele beschränkt, sondern durch den Umfang der beiliegenden Patentansprüche bestimmt. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung von Ausführungsbeispielen wird auf die beiliegenden Figuren Bezug genommen, von denen
- Figur 1a: eine schematische Querschnitts-Darstellung einer auf der Hornhaut eines Auges angeordneten Kontaktlinse,
- Figur 1b: eine schematische Ausschnittvergrößerung eines Randbereichs der Kontaktlinse aus Figur 1a,
- Figur 2: eine elektronenmikroskopische Aufnahme des Randbereichs der Kontaktlinse,
- Figur 3: ein eine Oberflächenbeschichtung anzeigendes Fluoreszenz-Diagramm,
- Figur 4: ein Flussdiagramm für ein Herstellungsverfahren der erfindungsgemäßen Kontaktlinse, und
- Figur 5: eine Querschnitts-Ansicht einer zur Herstellung nach Fig. 4 geeigneten Molding-Vorrichtung zeigt.

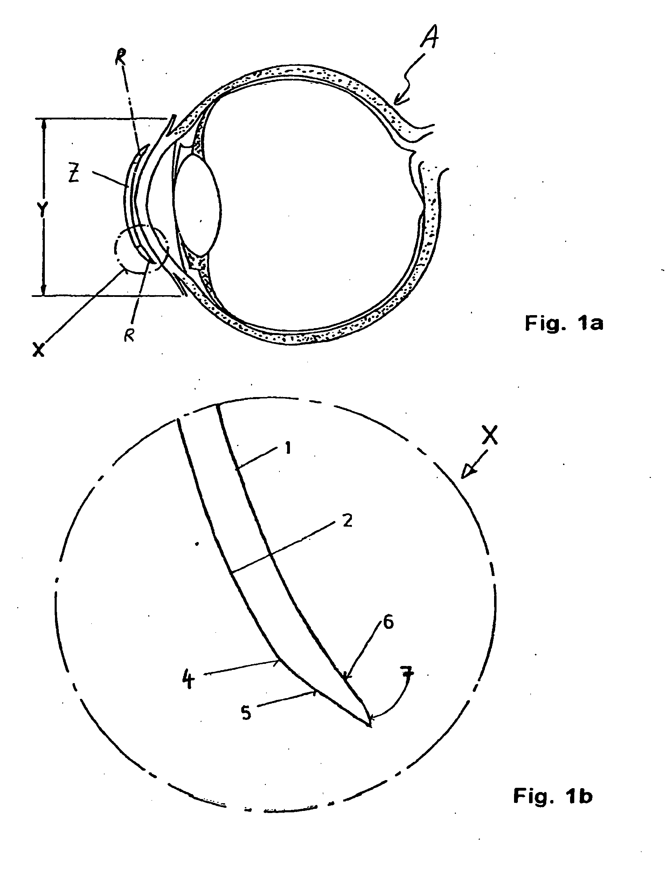

Die allgemeine Form einer Kontaktlinse ist in den Figuren 1a und 1b dargestellt: Die der Hornhaut zugewandte, in Benutzung auf einem Tränenflüssigkeitsfilm schwimmende Innenfläche 1 ist im zentralen Bereich Z konkav, und zwar rotationssymmetrisch-asphärisch mit einer Konuskonstanten von etwa -0.1 bis -0.5, also etwas elliptisch zugespitzt. Prinzipiell kann diese Fläche aber auch von der Rotationssymmetrie abweichen, wenn die physiologischen Bedingungen das erfordern. Die Außenfläche 2 der Linse ist naturgemäß konvex mit einem betragsmäßig etwas von jenem der Innenfläche abweichenden Radius, um die gewünschte dioptrische Wirkung bereitzustellen. Im Außenrandbereich R weichen die Krümmungen bzw. Radien von den zentralen Werten in folgender Weise ab: Auf der Außenfläche schließt sich radial an den zentralen Bereich ein ringförmiger Bereich 4 mit stärkerer (Einwärts-)Krümmung, also kleinerem Radius an. An diesen kann sich außen ein wiederum schwächer gekrümmter, sogar konischer (also ungekrümmter) oder geringfügig auswärts (also negativ) gekrümmter Bereich 5 anschließen. Betragsmäßig ist hier die Krümmung aber immer kleiner (d. h. der Radius größer) als in dem erstgenannten Übergangsbereich 4, d. h. die Linse läuft glatt aus.

Die Innenfläche 1 weist radial an den zentralen Bereich mit der elliptischen Fläche anschließend ebenfalls einen ringförmiger Bereich auf, der aber geringer gekrümmt, also flacher ist, was einem größeren Krümmungsradius in diesem Bereich entspricht. Hier ist der Krümmungsradius in einer Schnittebene gemeint, die die optische Achse der Linse enthält. Die von den Innenfläche und der Schnittebene gebildete Linie durchläuft einen Wendepunkt 6, d. h. die Krümmung der Linie wird zunächst Null und dann positiv. Für die Gauß'sche Flächenkrümmung bedeutet dies einen Wechsel zu negativen Werten. An diesen Bereich schließt sich dann der Bereich 7 an, wo die Innenfläche der Kontaktlinse sich an die globale Tangentialebene anschmiegt; hier ist dann die Krümmung in der zur radialen Schnittebene senkrechten Hauptkrümmungsebene Null, so dass die Gauß'sche Flächenkrümmung Null wird und noch weiter außen im unmittelbaren Kantenbereich wieder nach positiv wechselt.

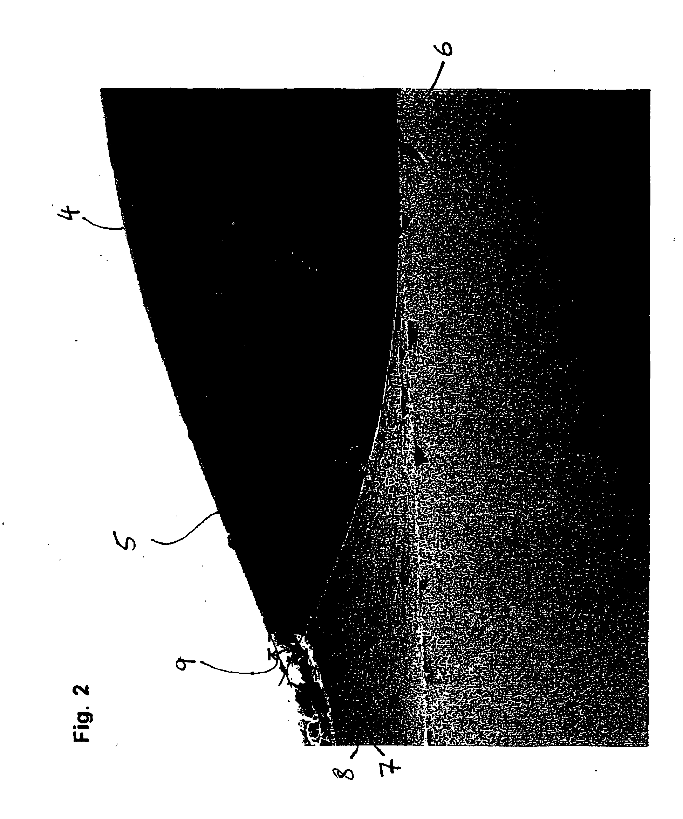

Zwischen diesen beiden Krümmungswechselpunkten 6 und 7 (in der Schnittebene) bzw. -linien (auf der Oberfläche) liegt ein Bereich, in welchem sich die Kontaktlinse allmählich, von radial innen nach außen betrachtet, von der Hornhaut abhebt. Dieser Bereich ist für den Tragekomfort ausschlaggebend. Wie die Erfinder erkannt haben, sollte in diesem Bereich weder eine allzu scharfe Kante ausgebildet sein, die den auf der Hornhaut befindlichen Tränenflüssigkeitsfilm unterbrechen oder gar in die Hornhaut einschneiden könnte; noch sollte der Randbereich eine nach auswärts vorspringende, stark gekrümmte Kante ("*Skispitzen-Profil*") aufweisen, die das beim Lidschlag von außen aufgleitende Augenlid irritieren könnte. Vielmehr wird durch die erfindungsgemäß sanft auf einen schnittkantenfreien Außenrand zu laufenden ringförmigen Bereiche (siehe Figur 2) erreicht, dass ein störungsfreies Aufgleiten der Kontaktlinse auf den Tränenflüssigkeitsfilm und gleichzeitig ein störungsfreies Aufgleiten des Augenlids auf die Kontaktlinse ermöglicht ist. Es wurde gefunden, dass der Radius der Innenfläche, also die inverse Krümmung, entlang der radialen Schnittfläche, beispielsweise zwischen 0,1 und 4 mm liegen kann, oder auch einerseits über 0,5 mm oder/und andererseits unter 2 mm. Die radiale Ausdehnung des negativ gekrümmten Flächenbereichs kann 1 µm bis 1 mm betragen, zum Beispiel einerseits über 10 µm oder/und andererseits unter 100 µm. Die Außenkante selbst kann statt eines spitzen Winkels 8 zwei stumpfe aufweisen, zwischen denen sich ein z. B. 10-30 µm messender annähernd zylindrischer Außenrandbereich 9 erstreckt, wie dies in Figur 2 zu erkennen ist.

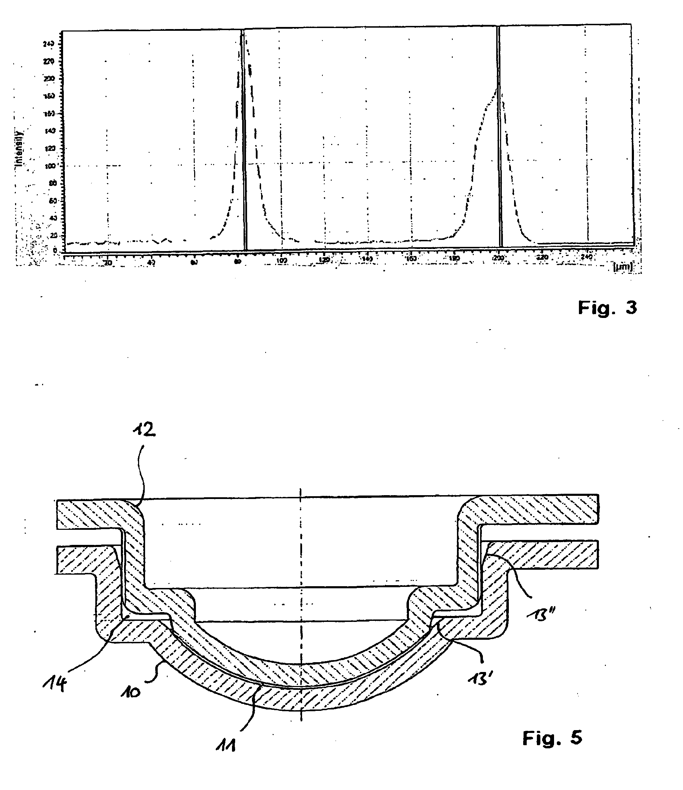

In Figur 3 ist ein Fluoreszenzdiagramm einer Oberflächenbeschichtung dargestellt, wie sie zur Hydrophilierung des an sich hydrophoben Silikon-Grundmaterials der Kontaktlinse aufgebracht werden kann. Der Kernbereich der Linse besteht aus Poly(dimethylsiloxan) mit einer Shore-A-Härte von 25. In diesem Beispiel ist zu Analysezwecken eine aufgebrachte PAA-(Polyacrylsäure)Schicht mit dem Fluoreszenzfarbstoff Rhodamin 6G eingefärbt, und die Tiefenausdehnung der Fluoreszenz durch konfokale Mikroskopie bestimmt worden. Wie man erkennt, beträgt die Gesamtdicke (Linienbreite) der PAA-Beschichtung einige 10 µm. Die Linsendicke an der Messposition (Linienabstand) beträgt 118 µm. Die Beschichtung erfolgte durch PECVD gefolgt von CVD. Während der Plasmabeschichtungsphase wurde das Druckverhältnis von einem anfangs deutlichen Argon-Überschuss (>10:1) zu einem gegen Ende ebenso deutlichen Argon-Unterschuss (<1:10) geändert, bei sinkendem Gesamtdruck. An diesen Konditionierungsschritt schloss sich eine Aufpolymerisation von wasserfreier Acrylsäure aus der Dampfphase bei ihrem Normaldampfdruck an, ohne Plasmaeinwirkung und ohne Beisein von Edelgas. Die initial plasmaunterstützt bereitgestellte Schicht hatte eine Dicke von 20-30 nm, also größenordnungsmäßig etwa ein Promille der gesamten Schichtdicke. Solche Schichten haben sowohl optisch wie auch, wegen der starken Hydrophilie, physiologisch hervorragende Eigenschaften. Der Kontaktwinkel der aufgebrachten Schicht in Wasser beträgt weniger als 10° und typischerweise 2-5°. Die günstigen Effekte der erfindungsgemäßen Formgebung werden durch diese Materialbehandlung zielgerichtet unterstützt.

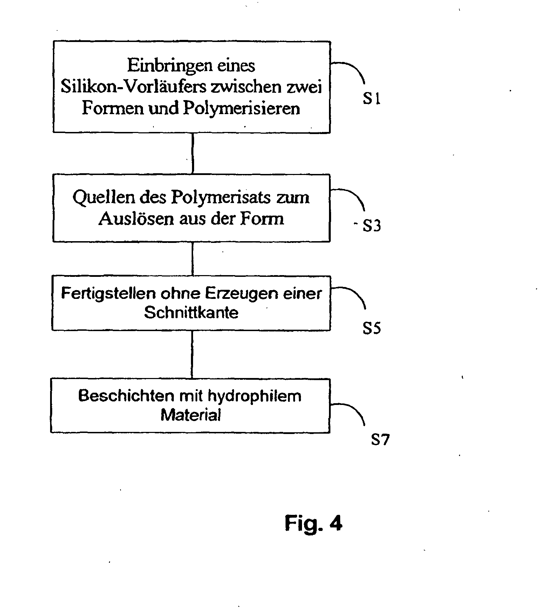

In Figur 4 ist ein Flussdiagramm eines erfindungsgemäßen Verfahrens dargestellt. Zunächst werden eine weibliche und eine männliche Form bereitgestellt, und ein Vorläufermaterial für Poly(dimethylsiloxan) wird in die weibliche Form eingebracht, mit dem männlichen Teil verschlossen und bei einer Temperatur zwischen 15°C-160°C für eine Dauer von 12-720 Minuten polymerisiert S1 (molding). Nach dem Verschließen werden die beiden Formteile gegeneinander um 180° oder einen anderen hinreichend großen Winkel (>20°) verdreht, solange die Reaktionsmischung gerade noch viskos ist (über 1000 cP; typisch ca. 4000 cP), so dass überschüssiges Silikon zuverlässig abgetrennt und in den Ringraum zwischen den Formteilen verdrängt wird. Bei dieser Abschnürung wird durch Einfluss der Oberflächenspannung auch die oben beschriebene Randkontur erzeugt, die den Verzicht auf eine Randbeschneidung oder andere Randbearbeitung, die eine Schnittkante erzeugt (z. B. Stanzen), ermöglicht. Zum Demolden wird die Kontaktlinse mit einem Alkan wie z. B. Hexan oder einem anderen unpolaren oder wenig polaren Lösungsmittel angequollen S3, so dass sie sich S5 ohne mechanische Einwirkung aus der Molding-Form und von den Herstellungsteilen löst. Das Dipolmoment des Lösungsmittels sollte dazu nicht mehr als 0,2 Debye betragen. Zur Unterstützung kann ein Ultraschallbad eingesetzt werden. Das Ausgangsmaterial kann ein flüssiges 2-Komponenten-Silikon von NuSil mit einem DK-Wert von über 700 barrer sein. Gewünschtenfalls wird die Linse nach Ausdampfen des Lösungsmittels im Vakuum in eine Beschichtungskammer überführt und zunächst mit Argonplasma gereinigt (ca. 1 min) und vorbereitet. Dann folgt eine Phase S7 mit leichtem Argonüberschuss von etwa 1:1 bis 2:1 (Partialdruckverhältnis) gegenüber Acrylsäuredampf, erhalten aus wasserfreier Acrylsäure. Beispielhafte Drücke sind 0,03 Torr für Argon und 0,015 Torr für Acrylsäure. Nach dieser Phase, die 10 bis 90 min dauert, schließt sich eine etwa zehnminütige Phase bei geschlossener Argon-Zufuhr und weiter reduziertem Acrylsäuredruck (ca. 0,1 mTorr) an. Dann wird der Plasmagenerator ausgeschaltet, und die Linse bei Raumtemperatur dem Sättigungsdampfdruck der Acrylsäure ausgesetzt, bis eine Linsentrübung den Abschluss des Vorgangs anzeigt (etwa 5 min). Die Kontaktlinse wird in hydrophiler Flüssigkeit, beispielsweise isotonischer Kochsalzlösung für 24 Stunden gewässert, um etwaige Reste des Beschichtungsagens zu entfernen, und bei über 120°C dampfsterilisiert.

In Figur 5 ist eine zweiteilige Molding-Form gezeigt, die zur Durchführung des oben beschriebenen Verfahren geeignet ist. Der untere, weibliche Teil 10 nimmt dabei zunächst die Reaktionsmischung auf und wird dann mit dem oberen, männlichen Teil 12 verschlossen, wobei ein mit der Reaktionsmischung gefüllter Raum 11 zwischen ihnen verbleibt. Der untere Teil 10 weist Formschrägen 13', 13" auf, die das Zusammenfügen und das Voneinander-Trennen der Formteile 10 und 12 erleichtern. Der Ringraum ist mit 14 bezeichnet.

Aus dem Verfahrensablauf ergibt sich eine Irregularität des Außenrandes insofern, als er von einer exakten Kreislinie abweicht, anders als dies z. B. von gestanzten Linsenkonturen bekannt ist. Da auch die Hornhaut niemals genau reguläre Kontur hat, ist diese Abweichung von einer Idealgestalt nicht nur nicht nachteilig, sondern hat sogar günstige Auswirkungen auf den Tragekomfort. Das Ausmaß der Irregularität kann dadurch quantifiziert werden, dass man der Projektion des Außenrandes rechnerisch, nach dem Kriterium der minimalen Abweichungsquadratsumme, eine ideal annähernde Kreisform zuordnet. Das mittlere Abweichungsquadrat ist dann ein Maß für die Irregularität, und beträgt mindestens 5000 µm² (umgerechnet auf Beträge: etwa 1 % des halben Linsendurchmessers), kann aber in Ausführungsformen auch mehr als 1000 µm² oder mehr als 10000 µm² betragen.

In den nachfolgenden Ansprüchen wird unter einem "über*wiegenden Bestehen*" ein massemäßiger Anteil von mehr als 50 % verstanden, im Besonderen von über 90 % bis zur Gänze. Unter "*Krümmung*" ist jeweils der inverse Krümmungsradius, d.h. des Radius des Schmiegekreises zu verstehen, wobei das Vorzeichen bei konvexen Flächen positiv und bei konkaven Flächen negativ ist. Die Gauß'sche Flächenkrümmung ist das Produkt der beiden Hauptkrümmungen, also dann negativ, wenn die beiden Hauptkrümmungen unterschiedliche Vorzeichen aufweisen (Sattelfläche), und dann Null, wenn eine oder beide Hauptkrümmungen Null sind (z. B. Zylinder- und Konusfläche).

Der Fachmann wird erkennen, dass Abweichungen von den oben beschriebenen Ausführungsformen möglich sind, ohne den Schutzbereich der beigefügten Ansprüche zu verlassen.

## Patentansprüche

1. Silikon-Kontaktlinse, wobei ein radialer Querschnitt der Kontaktlinse auf der Innenfläche der Kontaktlinse einen Randbereich zwischen einem Wendepunkt und der Außenkante aufweist, in dem die Querschnittskontur konvex ist,
**gekennzeichnet durch**
eine hydrophilierende Oberflächenbeschichtung, deren Wasserkontaktwinkel weniger als 10° beträgt.

2. Kontaktlinse nach Anspruch 1, wobei der Minimal-Radius der konvexen Querschnittskontur 0,1 - 10 mm beträgt.

3. Kontaktlinse nach Anspruch 2, wobei die hydrophilierende Schicht überwiegend aus (Meth)Acrylsäure-Einheiten besteht.

4. Kontaktlinse nach Anspruch 2 oder 3, wobei die hydrophilierende Schicht dicker ist als 1 µm.

5. Kontaktlinse nach einem der vorstehenden Ansprüche, wobei das Silikon Poly(dimethylsiloxan) ist.

6. Kontaktlinse nach einem der vorstehenden Ansprüche, wobei der Randbereich der Kontaktlinse 1 µm bis 1 mm, insbesondere 0,01 mm bis 0,1 mm breit ist.

7. Kontaktlinse nach einem der vorstehenden Ansprüche, wobei der Außenrand der Kontaktlinse eine Irregularität aufweist, derart, dass eine dem Außenrand nach dem Kriterium des geringsten mittleren Abweichungsquadrat zugeordnete Kreislinie ein mittleres Abweichungsquadrat von mindestens 5000 µm² aufweist.

8. Verfahren zur Herstellung einer Silikon-Kontaktlinse,
wobei ein weiblicher Formteil und ein männlicher Formteil bereitgestellt werden, und ein Silikon-Vorläufermaterial zwischen die Formteile eingebracht und dort polymerisiert wird,
**dadurch gekennzeichnet, dass**
die polymerisierte Kontaktlinse mittels einer die Kontaktlinse quellenden Flüssigkeit aus der Form gelöst und ohne Erzeugung einer Schnittkante fertiggestellt und dann in einem kombinierten PECVD/CVD-Verfahren hydrophilisiert wird.

9. Verfahren nach Anspruch 8, wobei die Kontaktlinse mit vernetzten (Meth)Acrylsäureeinheiten beschichtet wird.

10. Verfahren nach Anspruch 8 oder 9, wobei ein erster Schritt des Beschichtens in einem Niederdruck-Plasma erfolgt.

11. Verfahren nach Anspruch 10, wobei ein nachfolgender Schritt des Beschichtens ohne Plasmaeinwirkung aus der Gasphase erfolgt.

12. Verfahren nach einem der Ansprüche 8 bis 11, wobei zum Auslösen der Kontaktlinse aus der Form ein unpolare Flüssigkeit eingesetzt wird, deren Dipolmoment insbesondere weniger als 0,2 Debye beträgt.

13. Verfahren nach einem der Ansprüche 8 bis 12, wobei die ausgelöste Kontaktlinse, ggf. nach dem Beschichten, mit einer polaren Flüssigkeit behandelt wird, deren Dipolmoment insbesondere mehr als 1 Debye beträgt.

14. Verfahren nach einem der Ansprüche 8 bis 13, wobei bei noch flüssiger Reaktionsmischung die beiden Formteile gegeneinander rotiert werden, um den zur Bildung der Kontaktlinse vorgesehenen Teil der Reaktionsmischung von überschüssigem Material abzuschnüren.

15. Verfahren nach einem der Ansprüche 8 bis 14, wobei die Kontaktlinse die nach einem der Ansprüche 1 bis 7 ist.

## Claims

1. A silicone contact lens, wherein a radial cross-section of the contact lens on the inner face of the contact lens includes a rim region between a point of inflection and the outer edge, in which the contour of the cross-section is convex,
**characterized by**
a hydrophilizing surface coating, the water contact angle of which is less than 10°.

2. The contact lens of claim 1, wherein the minimum radius of the convex contour of the cross-section is 0.1 - 10 mm.

3. The contact lens of claim 2, wherein the hydrophilizing layer consists mainly of (meth)acrylic acid units.

4. The contact lens of claim 2 or 3, wherein the hydrophilizing layer is thicker than 1 µm.

5. The contact lens of one of the preceding claims, wherein the silicone is poly(dimethylsiloxane).

6. The contact lens of one of the preceding claims, wherein the rim region of the contact lens has a width of 1 µm to 1 mm, in particular of 0.01 mm to 0.1 mm.

7. The contact lens of one of the preceding claims, wherein the outer edge of the contact lens has an irregularity insofar, as a circle line ascribed to the outer edge according to the criterion of least mean squared deviations has an average squared deviation of at least 5000 µm².

8. A method of manufacturing a silicone contact lens, wherein a female mold part and a male mold part are provided, and a silicone precursor material is introduced in between the mold parts and is polymerized there,
**characterized in that**
the polymerized contact lens is released from the mold using a liquid swelling the contact lens and is completed without generating a cutting edge, and is then hydrophilized in a combined PECVD/CVD-process.

9. The method of claim 8, wherein the contact lens is coated with cross-linked (meth)acrylic acid units.

10. The method of claim 8 or 9, wherein a first coating step occurs in a low-pressure plasma.

11. The method of claim 10, wherein a subsequent coating step occurs from the gas phase without the action of a plasma.

12. The method of one of claims 8 to 11, wherein a non-polar liquid is used for releasing the contact lens from the mold, a dipole moment of which is less than 0.2 Debye.

13. The method of one of claims 8 to 12, wherein the released contact lens, after the coating if applicable, is treated with a polar liquid the dipole moment of which is in particular more than 1 Debye.

14. The method of one of claims 8 to 13, wherein, while the reaction mixture is still liquid, the mold parts are rotated with respect to one another in order to separate the part of the reaction mixture intended for forming the contact lens from excess material.

15. The method of one of claims 8 to 14, wherein the contact lens is the one of one of claims 1 to 7.

## Revendications

1. Lentille de contact en silicone, sachant qu'une section transversale radiale de la lentille de contact présente, sur la face intérieure de la lentille de contact, une zone de bord entre un point d'inflexion et l'arête extérieure, dans laquelle zone de bord le contour de la section transversal est convexe,
**caractérisée par**
un revêtement de surface à action hydrophile, dont l'angle de contact à l'eau est inférieur à 10°.

2. Lentille de contact selon la revendication 1, sachant que le rayon minimal du contour convexe de section transversale est compris entre 0,1 et 10 mm.

3. Lentille de contact selon la revendication 2, sachant que la couche à action hydrophile est majoritairement constituée de motifs à base d'acide (méth)acrylique.

4. Lentille de contact selon la revendication 2 ou 3, sachant que l'épaisseur de la couche à action hydrophile est supérieure à 1 µm.

5. Lentille de contact selon l'une quelconque des revendications précédentes, sachant que le silicone est un poly(diméthylsiloxane).

6. Lentille de contact selon l'une quelconque des revendications précédentes, sachant que la largeur de la zone de bord de la lentille de contact va de 1 µm à 1 mm, en particulier va de 0,01 mm à 0,1 mm.

7. Lentille de contact selon l'une quelconque des revendications précédentes, sachant que le bord extérieur de la lentille de contact présente une irrégularité, de manière telle qu'une lentille circulaire associée au bord extérieur selon le critère du carré moyen d'écart le plus petit présente un carré moyen d'écart d'au moins 5000 µm².

8. Procédé servant à fabriquer une lentille de contact à base de silicone, sachant qu'une partie moulée femelle et une partie moulée mâle sont fournies et sachant qu'un matériau précurseur à base de silicone est introduit entre les parties moulées et y est polymérisé,
**caractérisé en ce que**
la lentille de contact polymérisée est détachée du moule au moyen d'un liquide faisant gonfler la lentille de contact, est produite sans la réalisation d'une arête de coupe pour être alors rendue hydrophile selon un procédé combiné PECVD/CVD.

9. Procédé selon la revendication 8, sachant que la lentille de contact est enduite de motifs réticulés à base d'acide (méth)acrylique.

10. Procédé selon la revendication 8 ou 9, sachant qu'une première étape de l'opération d'enduction est réalisée dans un plasma à basse pression.

11. Procédé selon la revendication 10, sachant qu'une étape consécutive de l'opération d'enduction est réalisée en dehors de la phase gazeuse sans activation par plasma.

12. Procédé selon l'une quelconque des revendications 8 à 11, sachant que pour détacher la lentille de contact du moule, on utilise un liquide non polaire, dont le moment dipolaire présente notamment une valeur inférieure à 0,2 Debye.

13. Procédé selon l'une quelconque des revendications 8 à 12, sachant que la lentille de contact détachée, éventuellement après l'opération d'enduction, est traitée à l'aide d'un liquide polaire, la valeur du moment dipolaire de ce dernier présentant en particulier une valeur supérieure à 1 debye.

14. Procédé selon l'une quelconque des revendications 8 à 13, sachant qu'en présence d'un mélange réactionnel encore liquide, les deux parties moulées sont tournées l'une par rapport à l'autre afin de séparer par étranglement du surplus de matière, la partie du mélange réactionnel prévue aux fins de la réalisation de la lentille de contact.

15. Procédé selon l'une quelconque des revendications 8 à 14, sachant que la lentille de contact est une lentille de contact selon l'une quelconque des revendications 1 à 7.
